# EUROPEAN PATENT APPLICATION

(11) **EP 4 785 785 A2**
(43) Date of publication of application: **05.08.2026**
(21) Application number: 26152465.6
(22) Date of filing: 16.01.2026
(51) Int. Cl.: A01K 77/00

(54) **SPREADER BLOCK**

(30) Priority: 29.01.2025 GB 202501303
(71) Applicant: Fox International Group Limited, Warley Brentwood Essex CM14 5EG (GB)
(72) Inventor: STUART, Frazer, Brentwood, CM14 5EG (GB)
(74) Representative: Mathys & Squire

(57) **Abstract**

The present disclosure relates to a spreader block (100) for quickly constructing and dismantling a landing net. The spreader block comprises a main body (200); a first arm (204) and a second arm (204) both, each pivotably connected to the main body; a cam (400) pivotably connected to the main body; and a means (202) for actuating the cam; wherein the spreader block is arranged to provide a closed configuration in which the first arm and the second arm are substantially parallel to each other, and an open configuration in which the first arm and second arm are non-parallel to each other; and wherein the cam is arranged between the first arm and the second arm such that rotation of the means for actuating the cam relative to the main body moves the first arm and the second arm between the closed position and open position.

## Description

### Field of the invention

The present disclosure relates to a spreader block for quickly constructing and dismantling a landing net, and a net safe arrangement for the same.

### Background

Landing nets are used for many different types of fishing environments to help an angler capture and retrieve fish after the fish has been hooked by a fishing rod. Landing nets may comprise many different characteristics, for example, lightweight, corrosive-resistant, small, large, durable, and foldable. These nets may be used for carp, fly, saltwater, and freshwater fishing, and may be used in a large variety of environments including lakes, rivers, streams, and oceans.

The prolonged use of landing nets in potentially harsh environments may cause problems to arise in the landing net. For example, exposure to water and dirt may amount to corrosion and wear of the components of the landing net. Furthermore, landing nets may undertake a lot of debris and wear and tear which may lead to frequent jamming and a reduction in smooth operation of the landing net. As the need for suitable landing nets in more demanding environments is required, it is clear that some nets, with weaker materials or insufficient designs, are becoming fragile under frequent use. Moreover, landing nets which are suitable for quick assembly may comprise poor alignment, poor user designs and face excessive friction. These mechanisms may require excessive forces to open and close and deteriorate the experience of the user.

On the other hand, landing nets overengineered with heavy or complex designs may present a user with bulky and overweight landing nets which are complicated to utilise and time costly. The present invention aims to solve these problems, among others.

### Summary of the invention

Aspects of the disclosure are set out in the independent claims and optional features are set out in the dependent claims. Aspects of the disclosure may be provided in conjunction with each other and features of one aspect may be applied to other aspects.

An aspect of the disclosure aims to provide a spreader block for a landing net, the spreader block comprising: a main body; a first arm and a second arm both, each pivotably connected to the main body; a cam pivotably connected to the main body; and a means for actuating the cam; wherein the spreader block is arranged to provide a closed configuration in which the first arm and the second arm are substantially parallel to each other, and an open configuration in which the first arm and second arm are non-parallel to each other; and wherein the cam is arranged between the first arm and the second arm such that rotation of the means for actuating the cam relative to the main body moves the first arm and the second arm between the closed configuration and open configuration.

The vast majority of conventional spreader blocks on the markets are one fixed piece. To assemble the net arms into place, one net arm is inserted, and the other net arm must be levered and flexed into place with some difficulty. To disassemble the net arms, the user must release any tension/flex in the net arms to be able to slide them out of the spreader block. This process is quite difficult but needs to be done quickly and with some care/control once a fish is landed. Similarly, assembling such conventional landing nets is difficult because the user needs to manually spread and provide tension to the net arms.

A first advantage of the present invention may therefore be to provide a spreader block which can reversibly move between an open configuration and closed configuration, by way of actuation, to transform the spreader block from a small portable component into a landing net holder. In particular, an advantage of the present invention relates to a spreader block that may transition between a closed configuration and an open configuration by way of actuation. This may be advantageous compared to other landing net mechanisms wherein the arms of the mechanism do not sit substantially parallel in the closed position because the net arms are far easier to insert and remove from the spreader block when parallel. Another advantage being that the block takes up less space when not in use.

A third advantage of the present invention may be to provide a spreader block wherein the cam is located between the first arm and the second arm such that the size of the spreader block is reduced, the number of external parts is limited, and the internal components are less liable to external wear and tear.

The cam, the first arm, and the second arm may be configured to rotate independently about respective pivot points. In examples, the respective pivot points of the first arm and second arm are positioned mirror image to one another with respect to the longitudinal axis of the main body. In other examples, the pivot point of the cam is positioned on the longitudinal axis of the main body but longitudinally offset from the pivot points of the first arm and second arm. The pivot points may be fixed pivot points wherein the main body comprises holes and wherein the holes comprise rotatable fastening mechanisms configured to house the cam, the first arm, or the second arm.

Advantageously, the three independent respective pivot points of the cam, the first arm, and the second arm, in comparison to less pivot points or shared pivot points, may reduce the friction between components and spread the rotational force across the components. Wear and tear between the components and the actuation force required to rotate the components may be diminished.

The cam may be arranged between the first arm and the second arm such that rotation of the means for actuating the cam relative to the main body moves the first arm and the second arm between the closed position and open position by the cam sliding along the first arm and the second arm. In examples, the cam may comprise a high friction surface, such as natural rubber, wherein the cam is configured to roll across the surface of the first arm and the second arm. Advantageously, sliding the cam along the first arm and the second arm may allow for the sliding cam system to be compact, resilient under high force rotations, resistant to friction between components, and give rise to precise rotation of the first and second arm without large actuation force.

The cam may comprise a circumference, the circumference of the cam may comprise a depth and a ridge, the first arm may comprise a raised surface, and the second arm may comprise a raised surface; wherein the raised surface of the first arm and the raised surface of the second arm face one another and both comprise a groove which mimic the shape of the raised surface; and wherein the ridge is configured to traverse the grooves and the circumference is configured to traverse the raised surface when the cam slides along the first arm and the second arm. Advantageously, the circumference and ridges respectively traversing the raised surfaces and grooves inhibit lateral motion of the cam with respect to the first and second arms.

The raised surface of the first arm and the raised surface of the second arm may be nonparallel to the axis of the first arm and the axis of the second arm. In examples, the raised surfaces of the first and second arms may be configured to asymmetrically tilt the first arm and the second arm between the closed configuration and open configuration when the means for actuating the cam is rotated. Advantageously, the nonparallel raised surfaces may change the speed at which the first and second arm move between the open configuration and closed configuration with respect to the speed of rotation of the means for actuating the cam. The asymmetric tilting of the first and second arms also allows the spreader block to reduce the peak force required and resistance handled by the cam for moving from the open configuration to the closed configuration. The asymmetric tilting of the arms may also diminish the potential of mechanical jamming between the cam, first arm, and second arm of the sliding system.

In examples, the topography of the raised surface of the first arm and the topography of the raised surface of the second arm may be mirror image to one another.

The raised surface of the first arm and the raised surface of the second arm may both further comprise a notch, wherein the two notches are configured to reversibly hold opposite ends of the cam when the first arm and the second arm are in the open configuration. Advantageously, the notches allow the first and second arms to be fixed in the open configuration wherein the first and second arms may hold an open landing net therebetween for retrieving caught fish.

The cam may be released from the held position in the notches, and the first arm and the second arm are moved from the open configuration, by rotation of the means for actuating the cam. Advantageously, the first and second arms may be held in the open configuration unless acted upon by a user actuating the means for actuating the cam. The first and second arms may, therefore, stay in their open configuration under external forces such as, for example, the load of a fish and the force of throwing the landing net.

The circumference of the cam may further comprise: two concave surfaces; and two convex surfaces; wherein the two concave surfaces are opposite one another relative to the pivot point of the cam and the two convex surfaces are opposite one another relative to the pivot point of the cam. Advantageously, the varying surfaces of the circumference may allow the first arm, second arm, and cam sliding system to sit in a compact thin arrangement when in the closed configuration. The varying surface gradients may also reduce the force required on the means for actuating the cam and cam when moving the cam from the open configuration, when the raised surfaces are located on the convex surfaces, to the closed configuration, when the raised surfaces are located on the concave surfaces. In contrast, rotating the means for actuating the cam and the cam may require more force when sliding the raised surfaces from the concave surface to the convex surface. Less required force when moving from the open configuration to the closed configuration is desirable as it may allow for a quick release characteristic of the landing net when fish is caught.

The circumference of the cam may define the boundary of a solid figure-eight shaped body.

The solid figure-eight shaped body of the cam may be sandwiched between two generally oval-shaped flat faces which protrude beyond the concave surfaces of the circumference of the cam, and wherein the protruding faces are configured to enclose the raised surfaces of the first arm and the second arm when the first arm and the second arm are in the closed configuration. Advantageously, the protruding faces, when enclosing the raised surfaces, may increase the stability of the cam, first arm, and second arm when sliding past one another and inhibit any dissipated energy or external forces being used in lateral motion of the sliding components.

The means for actuating the cam may be configured to be operated from outside the main body. Advantageously, the inside of the main body is not open to the external environment and may not receive debris or excessive wear and tear. The inside components of the main body may therefore not be adjusted or interfered with without an external operator.

The means for actuating the cam may comprise an orifice configured to reversibly house the end of a lever, and wherein the lever is configured to provide rotational motion to the means for actuating the cam when provided with external torque. Advantageously, the means or actuating the cam may only be actuated when the lever is housed by the orifice. The configuration of the spreader block may not be altered when the lever is not housed by the orifice.

The main body may comprise an orifice which reversibly connects to the end of a supporting cylinder and houses an end of the lever such that the supporting cylinder and lever, when housed by the orifice of the main body, extend perpendicularly to the length of the first arm and the second arm, and wherein the supporting cylinder and lever assembly, when housed by the orifice of the main body, form a 'net safe' arrangement when the supporting cylinder is inserted and locked into the top of a bank stick or storm pole. Advantageously, the main body may comprise a detachable supporting system arranged perpendicular to the components of the spreader block such that the components of the spreader block may move uninterruptedly while the main body is supported.

The 'net safe' arrangement may be configured to support the spreader block above the ground when the end of the 'net safe' arrangement, distal to the spreader block, is inserted and locked into the top opening of a bank stick or storm pole, which is inserted into the ground. Advantageously, the spreader block may be reversibly supported above the ground, when in use, such that a user does not have to hold the spreader block or landing net in place.

The rim of the supporting cylinder, reversibly connected to the orifice of the main body, may comprise an anchoring device configured to be inserted into the main body and inhibit twisting of the spreader block relative to the bank stick arrangement. Advantageously, under high external forces such as weather, catching fish, water currents, or fish movement within the net, the spreader block and landing net will not rotate with respect to the fixed and grounded bank stick arrangement.

The orifice of the actuating member, when the first arm and the second arm are in the open configuration, may be at least partially blocked by the bank stick arrangement. Advantageously, when the spreader block is in the open configuration and grounded by the bank stick arrangement, the means for actuating the cam, cam, and arms cannot be moved from the open configuration.

The cam and means for actuating the cam assembly, first arm, and second arm may be detachably connected to the main body. In examples, the first arm and the second arm may be detachably and pivotably connected to the main body by respective fastening mechanisms, and wherein the respective fastening mechanisms also secure a casing to the main body which is configured to clamp the cam and means for actuating the cam to the main body.

Advantageously, the detachable nature of the components of the spreader block allows the spreader block to be easily manufactured, assembled, and dismantled. The detachable nature of the spreader block also may allow flawed or damaged components to be replaced quickly. The casing which is configured to clamp the cam and means for actuating the cam to the main body allows for an easy "unfasten and slide out" release mechanism of the cam and means for actuating the cam from inside the main body.

In examples, the fastening mechanisms may be spring-loaded and configured to automatically return the first and second arm to the closed position when the cam is actuated out of the notches of the raised surface of the first arm and the raised surface of the second arm. However, in other examples no spring is provided. For example, a cord may connect the distal ends of the two elongated members of the net forming the net arms. The cord may be shorter than the distance between the tips of the two fully spread elongated members forming the net arms. The elongated members/net arms therefore flex slightly to accommodate this difference. Advantageously, this (i) stops the elongated members/net arms from being able to pull out of the arms of the spreader block, (ii) puts tension into the system, pulling the ends or tips of the two fully spread elongated members forming the net arms towards each other. This tension pulls the elongated members/net arms tightly towards the cam, and therefore holds the cam into the holding recesses or notches in the arms, (iii) it springs the mechanism into the closed configuration, so that when the user unlocks the cam, the arms spring naturally back to being parallel which may help when transporting caught fish and/or transporting the landing net.

The first arm and the second arm may be configured to detachably connect to a first elongated member and a second elongated member respectively, and wherein the first elongated member and the second elongated member are configured to reversibly hold a net therebetween. Advantageously, the detachable nature of the elongated members and net allows the landing net to be easily dismantled, compactly packed, and transported. Advantageously, the type of elongated members and net used may be changed if the setup is not appropriate for the fishing environment.

Once a fish is in the net, the user will remove the elongated members and net assembly from the spreader block, hold the two elongated members parallel to one another, and transport the fish in this sling-like assembly, because it is much smaller and easier to handle than the complete net. For example, if the fish is landed on a boat, the elongated member and net assembly will then be removed from the spreader block and held over the side of the boat so that the fish can remain in the water, but securely held for the journey back to the bank. Once on the bank, the sling is then transported to a landing mat for examination of the fish. The ability to quickly and easily remove the elongated members and net from the spreader block simplify the process of getting the fish out of the water considerably.

The main body, on the side distal to the length of the first arm and the second arm, may extend into a thin shaft which is detachably housed by an elongated handle. Advantageously, the landing net may be handheld by a user at a distance from the body of water.

An aspect of the disclosure aims to provide a spreader block for a landing net, the spreader block comprising: a lever configured to be torqued by a user; a cam configured to be turned by the lever; a first arm and a second arm, both configured to be tilted by the cam; and three pivot points configured to provide independent rotation of the cam, first arm, and second arm.

An advantage of the present invention may be to provide a spreader block with two arms which may be tilted by a user operating a lever which turns a cam. The independent motion of the cam, first arm, and second arm allows the torque applied by the user to precisely control both arms equally and the force of the torque to be spread across multiple components to reduce peak force and friction through the spreader block.

An aspect of the disclosure aims to provide a net support arrangement comprising: the spreader block; a first elongated member and a second elongated member detachably connected to the first arm and the second arm of the spreader block respectively; and a net mounted on the first elongated member and second elongated member; wherein the spreader block is configured to reversibly hold and move the first elongated member and second elongated member between a closed configuration in which the first elongated member is substantially parallel to the second elongated member and an open configuration in which the first elongated member is non-parallel to the second elongated member; and wherein the net is configured to be removably mounted on the first elongated member and second elongated member when in the closed configuration and fixedly mounted on the first elongated member and second elongated member when in the open configuration.

An advantage of the present invention may be to provide a net support arrangement of a landing net which may be dismantled when not in use but may not be dismantled, by a user or external forces, when in an open configuration.

An aspect of the disclosure aims to provide a kit of parts for a ground supported landing net or 'net safe', the kit of parts comprising: the spreader block; a first elongated member and a second elongated member detachably connected to the spreader block; a net removably mounted on the first elongated member and the second elongated member; and a detachable elongated handle.

An advantage of the present invention may be to provide a kit of parts wherein each part of the kit may be replaced in case of damage or for maintenance. The parts of the kit may also be renewed or upgraded in the case that a newer version or model is developed.

In another aspect there is provided a net safe arrangement for supporting a landing net. The net safe arrangement comprises a main body for supporting two net arms; a receiving portion in the main body; a supporting cylinder configured to detachably couple to the receiving portion; wherein the supporting cylinder is configured to detachably couple to a bank stick to support the landing net; and wherein at least one of the supporting cylinder and/or receiving portion comprise means to inhibit rotation of the supporting cylinder relative to the main body.

The supporting cylinder may have an aperture for receiving the bank stick, for example via an interference fit. The supporting cylinder may further comprise means to inhibit rotation of the supporting cylinder relative to the bank stick.

The main body may be the main body of a spreader block of a landing net. The supporting cylinder and/or main body may comprise a coupling mechanism that inhibits rotation of the supporting cylinder relative to the main body. For example, the receiving portion (for example, an orifice) may comprise an anchoring notch and proximal end of the supporting cylinder may comprise an anchoring device (for example, the rim of the supporting cylinder may comprises an anchoring device), wherein the anchoring device is configured to be housed by the anchoring notch to inhibit rotation. Additionally, or alternatively, the receiving portion and/or main body may comprise protrusions or other means configured to be received by corresponding notches or recesses on the supporting cylinder.

### Drawings

Embodiments of the disclosure will now be described, by way of example only, with reference to the accompanying drawings, in which:
Figure 1 is a zoomed-out perspective view of a spreader block with a bank stick arrangement in use in a landing net system according to embodiments of the disclosure;
Figure 2 is a front-on view of a spreader block in an open configuration according to embodiments of the disclosure;
Figure 3A is a front-on view of a spreader block in an open configuration with a bank stick arrangement according to embodiments of the disclosure;
Figure 3B is a perspective view of a spreader block in an open configuration with a bank stick arrangement, as shown in Figure 3A, according to embodiments of the disclosure;
Figure 4 is a front-on view of a spreader block in a middle configuration according to embodiments of the disclosure;
Figure 5A is a front-on view of a spreader block in a closed configuration according to embodiments of the disclosure;
Figure 5B is a back-on perspective view of the spreader block in a closed configuration, as shown in Figure 5A, according to the embodiments of the disclosure
Figure 6A is a perspective view of the main body and casing of the spreader block as shown in Figure 1, according to embodiments of the disclosure;
Figure 6B is a perspective view of the main body of the spreader block as shown in Figure 1, according to embodiments of the disclosure;
Figure 7A is a front-on view of the first arm and the second arm of the spreader block, as shown in Figure 5A, in a closed configuration according to embodiments of the disclosure;
Figure 7B is a perspective view of the first arm and the second arm of the spreader block, as shown in Figure 5A, according to embodiments of the disclosure;
Figure 8A is a front-on view of the cam and the means for actuating the cam of the spreader block, as shown in Figure 5A, according to embodiments of the disclosure;
Figure 8B is a perspective view of the cam and the means for actuating the cam of the spreader block, as shown in Figure 8A, according to embodiments of the disclosure;
Figure 8C is a side-on view of the cam and the means for actuating the cam of the spreader block, as shown in Figure 8A, according to embodiments of the disclosure;
Figure 9A is a front-on view of the cam and the means for actuating the cam between the first arm and the second arm in the closed configuration, as shown in Figure 5A, according to embodiments of the disclosure;
Figure 9B is a perspective view of the cam and the means for actuating the cam between the first arm and the second arm in the closed configuration, as shown in Figure 9A, according to embodiments of the disclosure;
Figure 10A is a perspective view of the cam and the means for actuating the cam between the first arm and the second arm in the middle configuration, as shown in Figure 4, according to embodiments of the disclosure;
Figure 10B is a back-on view of the cam and the means for actuating the cam between the first arm and the second arm in the middle configuration, as shown in Figure 10A, according to embodiments of the disclosure;
Figure 11A is a front-on view of the cam and the means for actuating the cam between the first arm and the second arm in the open configuration, as shown in Figure 2, according to embodiments of the disclosure; and
Figure 11B is a perspective view of the cam and the means for actuating the cam between the first arm and the second arm in the open configuration, as shown in Figure 11A, according to embodiments of the disclosure;

### Specific description

Embodiments of the disclosure relate to a spreader block configured to quickly construct and dismantle a landing net. It will be appreciated from the discussion above that the embodiments shown in the Figures are merely exemplary, and include features which may be generalised, removed, or replaced as described herein and as set out in the claims.

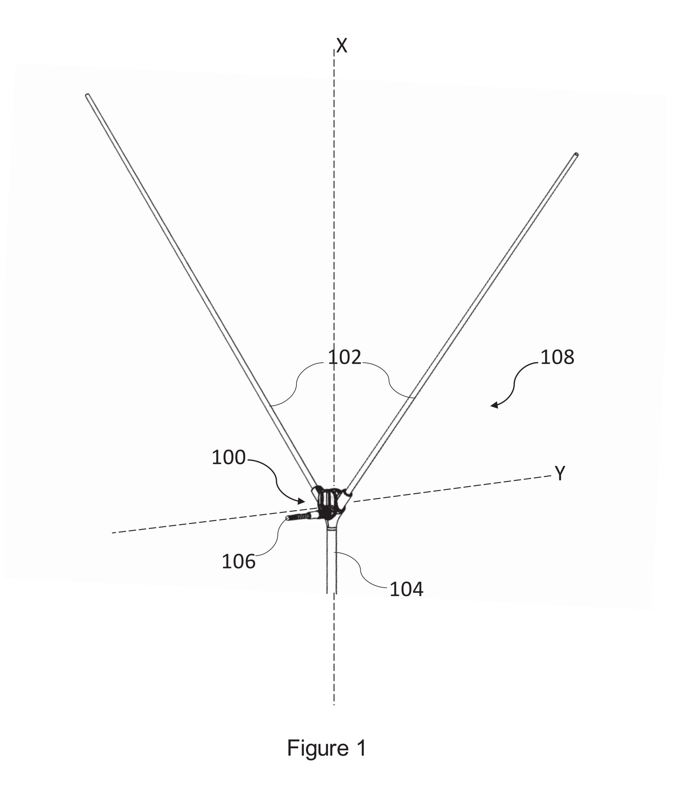

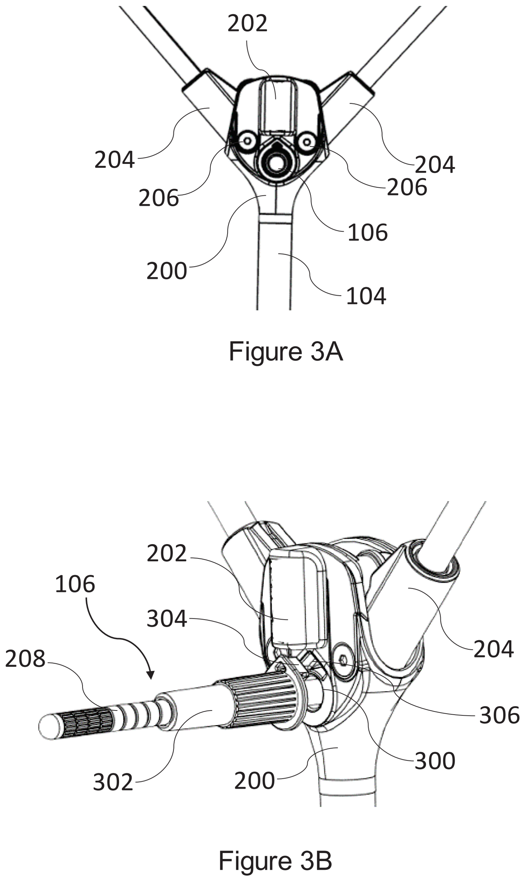

Figure 1 shows a zoomed-out perspective view of an example spreader block 100. The spreader block 100 optionally comprises a net safe arrangement 106, a longitudinal axis X, and a lateral axis Y. The front of the spreader block 100 and the back of the spreader block 100 refer to opposite sides of the spreader block along the lateral axis Y. The net safe arrangement 106 is an elongated device which is reversibly connected to the spreader block 100 such that it sits parallel to the lateral axis X protruding out of the front face of the spreader block 100. The net safe arrangement 106, and its function, will be described in greater detail with respect to Figures 3A and 3B.

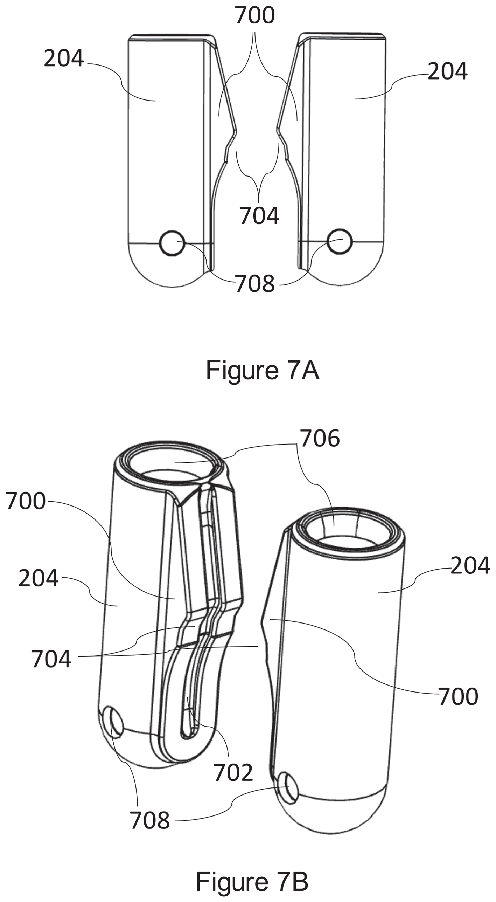

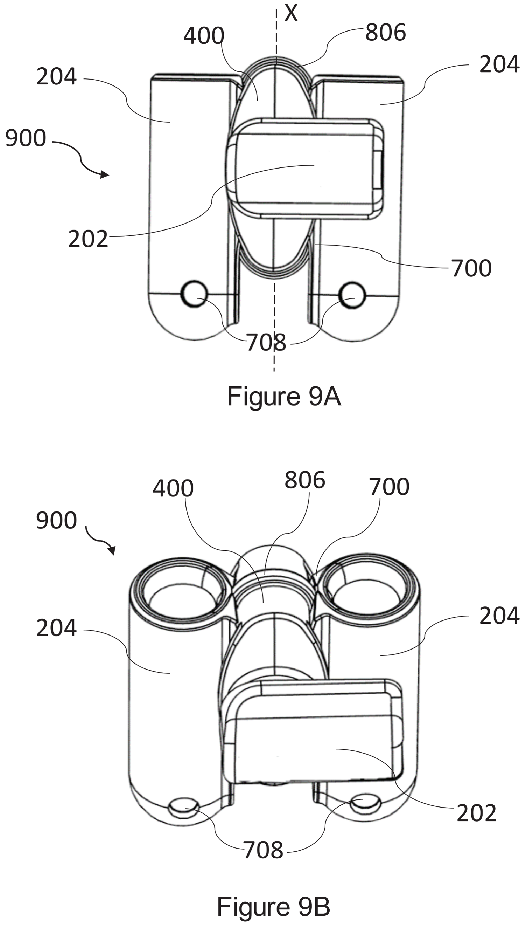

As shown in Figure 1, the spreader block 100 is optionally connected to two elongated members or net arms 102 and an elongated handle 104. The elongated handle 104 may be detachably coupled to the spreader block 100 (e.g., via a screw) or the elongated handle 104 may be permanently attached with the spreader block 100 (for example, integral with). The top and bottom of the spreader block 100 refer to opposite sides of the spreader block 100 along the longitudinal axis X, wherein the bottom of the spreader block 100 connects to the elongated handle 104. The two elongated members 102 are detachably connected to the top of the spreader block 100 via a first arm 204 and a second arm 204 such that they are sat in an open configuration, for example a first configuration. The two elongated members 102 extend away from the spreader block 100. The shape and length of the two elongated members 102 may vary depending on the use of the system. In examples, the two elongated members 102 are straight and 42 inches (107 cm) or 50 inches (127 cm) in length. The first arm 204 and second arm 204, and the mechanism of detachably connecting the arm 204 and second arm 204 to the two elongated members 102, are described in greater detail with reference to Figure 7B. The elongated handle 104 is detachably connected to the bottom of the spreader block 100 via a fastening mechanism, for example a clipping mechanism or a screwing mechanism, such that it extends along the longitudinal axis X away from the spreader block. The connection between the elongated handle 104 and the spreader block 100 is not shown in detail in this disclosure but it should be appreciated that multiple configurations may provide the connection mechanism. In examples, the bottom of the spreader block 100 extends into a cylindrical member which reversibly inserts into the proximal end of the elongated handle 104. In other examples, the bottom of the spreader block 100 forms a cylindrical opening which the elongated handle 104 reversibly inserts into. Although not depicted in Figure 1, the spreader block 100 comprises internal moving mechanisms which may move the first arm 204, second arm 204, and two elongated members 102 such that they sit in different configurations. Further configurations of the arms 204 and elongated members 102 are discussed with respect to Figures 9A, 10A, and 11A.

Throughout this disclosure the use of proximal will describe parts of components located close to the spreader block 100 and the use of distal will describe parts of components located far from the spreader block 100.

The spreader block 100 is configured to be removably connected to the elongated handle 104 and the two elongated arms 102 such that it creates a landing net system 108. In the landing net system 108, the spreader block 100 is configured to move the two elongated arms 102 between an open configuration and a closed configuration, or a first configuration and a second configuration. The two elongated arms 102, when in the closed position, are configured to receive a net such that the net slides onto the two elongated arms 102. Once received, the net is configured to cover the two elongated arms 102. When subsequently in the open position, the two elongated members 102 are positioned at a distance and angle from one another, as shown in Figure 1, such that the rim of the net is configured to be stretched such that it is irremovable from the two elongated arms 102. The net cannot slide off the two elongated arms 102 when they sit in the open configuration. In other examples, the net is permanently attached therebetween the two elongated arms 102 such that the net is configured to only be removed from the landing net system 108 if the two elongated members 102 are detached from the spreader block 100.

The elongated handle 104 is configured to provide a hand-held component for the landing net system 108 such that the spreader block 100 and net 102 may be utilised while being held by a user. The length of the elongated handle 104 may be between 6ft and 8ft (183cm and 244cm). The elongated handle 104 is also configured to provide leverage and manoeuvrability of the distal side of the landing net system 108 such that the net may be cast or held at a distance from a user. The net safe arrangement 106 is configured, at the distal end, to be placed into the ground, and, at the proximal end, to be detachably connected to the landing net system 108 such that it provides a stand for the landing net system 108 wherein the landing net system 108 may be utilised without being held by a user, at a distance off the ground.

In use, the spreader block 100, two elongated arms 102, elongated handle 104, and net safe arrangement 106 create a fixed landing net system 108 for holding caught fish at a distance from a user and above the ground.

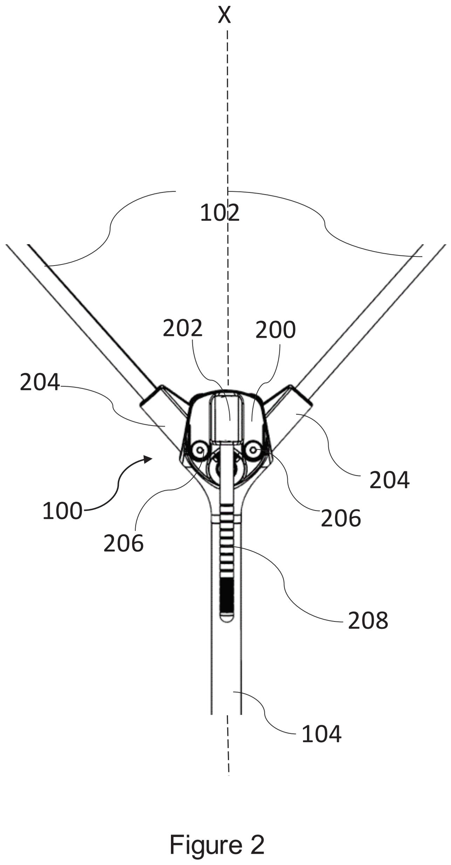

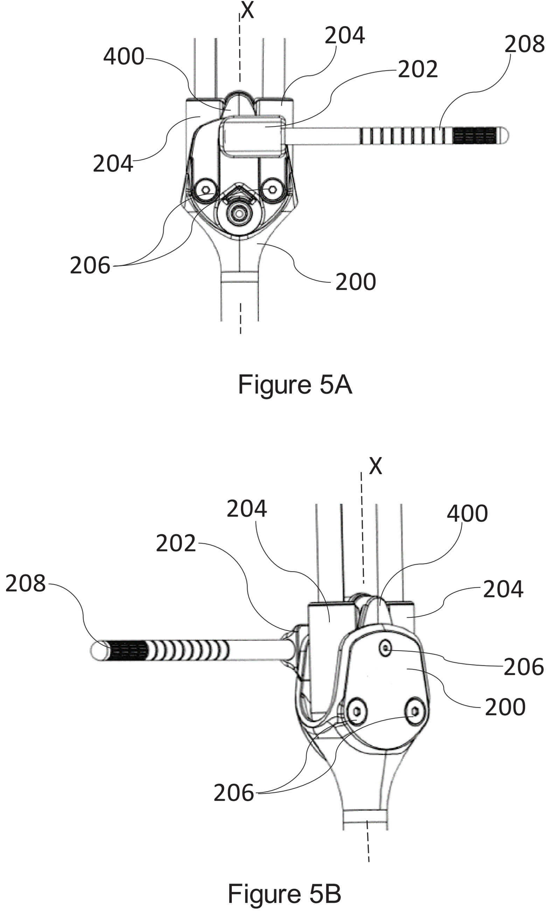

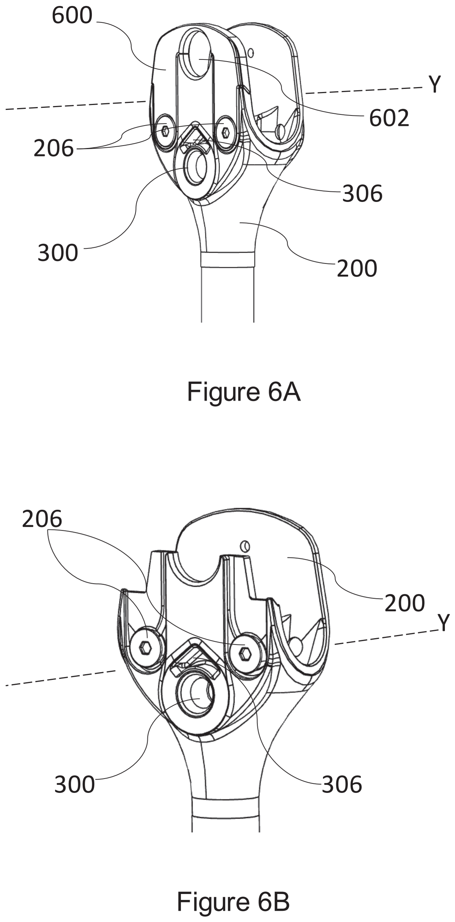

Figure 2 shows a close front-on view of the spreader block 100 in the open configuration. In Figure 2 we can see the front of the spreader block 100. The spreader block 100 comprises a first arm 204, a second arm 204, a main body 200, a means for actuating the cam 202, fastening mechanisms (also known as pivot points) 206, and a lever 208. The main body 200 optionally comprises two generally circular faces which define the front and back of the spreader block 100. The two generally circular faces sit at a distance to one another and join and extend into a cylindrical body at the bottom of the spreader block 100 which is aligned with the longitudinal axis X. The generally circular faces of the main body 200 are each detachably connected to, and house, opposite sides of two fastening mechanisms 206 which are aligned with the lateral axis Y. The two fastening mechanisms 206 symbolise two pivot points 206, one for the first arm 204 and one for the second arm 204. The two fastening mechanisms 206 housed by the main body 200 rotatably connect the first arm 204 and second arm 204 to the main body 200 such that the first arm 204 and second arm 204 are partially housed within the main body 200 and rotatable about the pivot points 206. The fastening mechanisms 206 are detachably connected to the main body 200 such that the pivot points 206 of the first arm 204 and second arm 204 are located generally halfway between the top and bottom of the spreader block 100, on opposite sides of the longitudinal axis X with a separation between one another. Further details about the main body 200 and fastening mechanisms 206 will be discussed with reference to Figures 5B, 6A, and 6B. Further details about the first arm 204 and second arm 204 will be discussed with reference to Figures 7A and 7B.

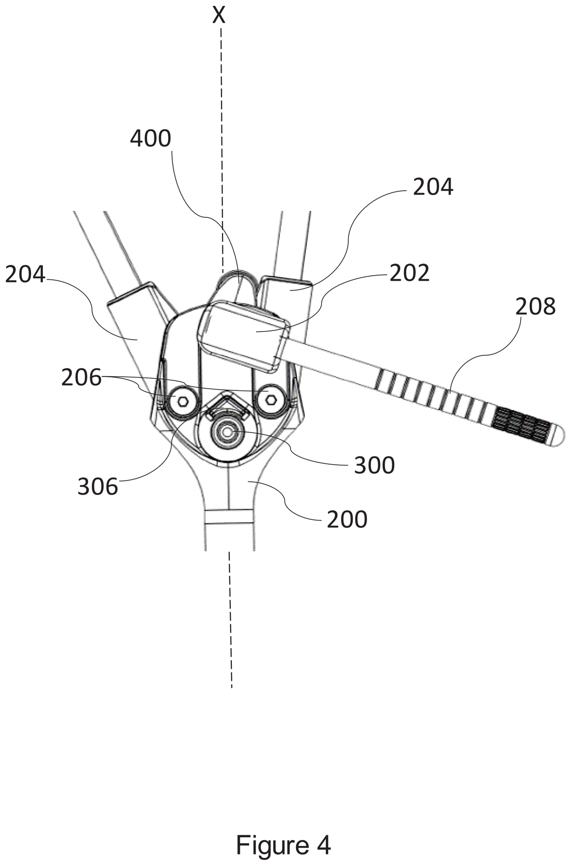

The means for actuating the cam 202 is optionally fixedly connected to a cam which is positioned between the first arm 204 and the second arm 204, slightly above the pivot points 206. In Figure 2 we cannot see the cam, but we see that the means for actuating the cam 202 is positioned outside the front face of the main body 200 between, and slightly above, the pivot points 206 of the first arm 204 and the second arm 204. In examples the means for actuating the cam 202 is positioned inside the main body 200. The means for actuating the cam 202 is rotatably connected to the main body 200 via the front face and detachably houses the proximal end of the lever 208. In the example spreader block 100 of Figure 2 the means for actuating the cam 202 is depicted as a generally cylindrical body. The cylindrical body of the means for actuating the cam 202 is rotatably connected to the main body 200 on the top of the front face and extends downwards along the longitudinal axis X, perpendicularly to the pivot point 206 which it is connected to. The pivot point 206 of the means for actuating the cam 202 is also the pivot point 206 of the cam and is not shown in Figure 2 but is depicted in Figures 5B, 6A, and 6B. The bottom end of the cylindrical body of the means for actuating the cam 202, not connected to the pivot point 206, comprises an orifice which detachably houses the end of the lever 208 such that the lever 208 extends away from the main body 200 along the longitudinal axis X. In the open configuration, as shown in Figure 2, the means for actuating the cam 202 and the lever 208 are aligned with the longitudinal axis X. In other configurations, when the lever 208 is housed by the orifice of the means for actuating a cam 202, the lever 208 and the means for actuating a cam 202 will not align with the longitudinal axis X. Further details about the means for actuating the cam 202 are discussed with reference to Figures 4, 5A, 5B, 8A, 8B, and 8C. As seen in Figure 1, the spreader block 100 of Figure 2 is also optionally detachably connected to the two elongated members 102 and the elongated handle 104 to form the landing net system 108.

The main body 200 is configured to at least partially house the moving components of the spreader block 100 (the cam, the first arm 204, the second arm 204, the means for actuating the cam 202, the fastening mechanisms 206) wherein the moving components can rotate without any linear motion. The main body 200 is also configured to detachably connect to further removable components (such as the net safe arrangement 106 and the elongated handle 104) wherein the removable components are configured to hold the spreader block at required positions, although it will be understood in other examples either of these components (the net safe arrangement 106 and/or the elongated handle 104) may not be removable. The fastening mechanisms 206 are configured to detachably connect the first arm 204, second arm 204, and cam 400 to the main body 200 such that they may rotate within the main body 200. The fastening mechanisms 206 are configured to act as pivot points 206 for the rotation of the first arm 204, second arm 204, and cam. The means for actuating the cam is configured to be rotated by the lever 208 and to provide rotational means to the cam, and in turn, the first arm 204 and second arm 204. The first arm 204 and second arm 204 are configured to detachably house one of the two elongated members 102, on their distal end, and to be actuated by the cam such that they rotate about the pivot points 206 on their proximal end. In turn, the two elongated members 102 are configured to be rotated about the pivot points 206 of the first arm 204 and second arm 204. The lever 208, when connected to the means for actuating the cam 202, is configured to provide a handle which, when receiving torque by a user, rotationally actuates the means for actuating the cam 202 such that it rotates about the pivot point 206 of the cam. The lever 208 is also configured to detach from the means for actuating the cam 202 such that the means for actuating the cam 202, the cam, the first arm 204, and second arm 204 cannot be rotated and stay fixed in their present configuration.

In use, the spreader block 200 of Figure 2 provides a landing net system 108 which is able to hold a net and be moved between an open and closed configuration by a user. In the open configuration, the landing net system 108 and net may hold caught fish and, in the closed configuration, the landing net system 108 and net may trap caught fish or be easier to transport.

Figures 3A and 3B show a close front-on view and perspective view of the landing net system 108 with the net safe arrangement 106 in the open configuration, as shown in Figure 1. As shown in Figure 3A, the net safe arrangement 106 is optionally connected to the main body 200 of the spreader block 100 via the front generally circular face below the means for actuating the cam 202 and between the two pivot points 206 of the first and second arms 204. Figure 3B of the spreader block 100 shows the net safe arrangement 106 partially detached from the main body 200. The main body 200 optionally comprises an orifice 300 which detachably houses the net safe arrangement 106. In Figure 3B the location of the net safe arrangement-orifice connection 106, 300 is depicted as being between the pivot points 206 and below the means for actuating the cam 202, but it should be appreciated that the connection may be located in a different position on the main body 200. The net safe arrangement 106 comprises the lever 208 and a supporting cylinder 302 wherein the proximal end of the lever 106 is detachably housed by the distal end of the supporting cylinder 302. The supporting cylinder 302 comprises a chamber throughout its length and a proximal end covered in knurling. The lever 208 is smaller in diameter than the supporting cylinder 302 and comprises a series of knurling and helical grooves along its length. The rim of the orifice 300 comprises an anchoring notch 306 and the rim of the proximal end of the supporting cylinder 302 comprises an anchoring device 304, wherein the anchoring device 304 is housed by the anchoring notch 306.

Figure 3B helpfully illustrates the difference in the landing net systems 108 of Figures 1 and 2. The landing net system 108 of Figure 1 has a net safe arrangement 106 whereas the landing net system 108 of Figure 2 has a lever 208. In the example shown, the lever 208 is configured to be detached from the means for actuating the cam 202 to create the net safe arrangement 106. The orifice of the main body 300 is configured to detachably house the net safe arrangement 106. The supporting cylinder 302 is configured to be gripped by a user and provide a stable connection between the net safe arrangement 106 and the main body 200 wherein the anchoring device 304 and anchoring notch 306, together, are configured to inhibit rotation of the net safe arrangement 106 within the main body 200. The lever 208 is configured to provide an elongated member which can be securely fixed into the ground and supporting cylinder 302. The lever 208 is also configured to provide a dual purpose for the landing net system 108 wherein one purpose is to secure the fixed configuration landing net system 108 to the ground and the other purpose is to allow the landing net system 108 to move between configurations.

However, in other examples, it will be understood that the net safe arrangement 106 may not require relocating the lever 208 but may instead be a separate feature. For example, in some embodiments the net safe arrangement 106 may be provided in addition to a separate lever 208. For example, the net safe arrangement 106 may comprise the supporting cylinder 302. In such examples the supporting cylinder 302 may be configured to lock into a bank stick (for example, via an interference fit) instead of and/or in addition to lever 208. The net safe arrangement 106 may detachably couple to the main body (for example via a screw thread), for example via a receiving portion such as orifice 300, or may be permanently coupled to the main body 200. As with the example described above, the supporting cylinder 302 and/or main body 200 may comprise a coupling mechanism that inhibits rotation. For example, the rim of the orifice 300 may comprise an anchoring notch 306 and the rim of the proximal end of the supporting cylinder 302 may comprises an anchoring device 304, wherein the anchoring device 304 is housed by the anchoring notch 306. Additionally, or alternatively, the orifice 300 and/or main body 200 may comprise protrusions or other means configured to be received by corresponding notches or recesses on the supporting cylinder 302.

In use, the spreader block 100 of Figures 3A and 3B may be quickly transitioned between a ground base landing net to a retractable landing net.

Figure 4 shows a front-on view of the spreader block 100 in a middle configuration. In order to transition the spreader block 100 from the open configuration in Figures 3A and 3B to the middle configuration as shown in Figure 4 the net safe arrangement 106 is detached from the main body 200, the lever 208 is removed from the support cylinder 302, and the lever 208 is inserted into the means for actuating the cam 202 such that it aligns with the longitudinal axis X. The lever 208 is then actuated by the torque of a user such that it is no longer aligned with the longitudinal axis X.

In the middle configuration, as shown in Figure 4, the cam 400 of the spreader block 100 has rotated such that part of the cam 400 is visible over the top of the main body 200. As depicted in Figure 4 the length of the cam 400 is perpendicular to the length of the means for actuating the cam 202. The length of the lever 208 is no longer aligned with the longitudinal axis X and the length of the cam 400 is no longer perpendicular to the longitudinal and lateral axes X, Y. In Figure 4 the orifice 300 and the anchoring notch 306, which are not housing the supporting cylinder 302 and the anchoring device 304, are visible. The lever 208, when housed by the means for actuating the cam 202, is configured to receive torque by a user and rotate the means for actuating the cam 202 about the pivot point of the cam 206. The means for actuating the cam 202, when rotated, is configured to rotate the cam 400 about its pivot point 206. Movement of the lever 208 from the first configuration, aligned with the longitudinal axis X, to the second configuration, perpendicular to the longitudinal and lateral axis X, Y, is configured to turn the cam 400 such that the length of the cam moves from aligning perpendicular to the longitudinal and lateral axis X, Y to aligning parallel to the longitudinal axis X. The cam 400 is configured to be rotated and wherein rotation of the cam 400 tilts the first arm 204 and second 204 between the open and closed configuration, or the first configuration to the second configuration.

In use, the inside components of the main body and configuration of the landing net system 108 are adjusted and moved with assistance of an external operator. Without the lever 208, and an external operator, the inside components of the main body and configuration of the landing net system 108 cannot be adjusted. The spreader block 100 may be transformed from a small portable component into the main component of a landing net system 108.

Figures 5A and 5B show a front-on and back view of the spreader block 100 in the closed configuration with the lever 208 housed by the means for actuating the cam 202. In the closed configuration, the generally cylindrical body of the means for actuating the cam 202 and the lever 208 are aligned perpendicular to the longitudinal axis X and the length of the cam 400, the first arm 204, and the second arm 204 are aligned parallel to the longitudinal axis X. In Figure 5B the fastening mechanisms 206 for the first arm 204, second arm 204, and cam 400 are visible and form a triangle shape on the back of the main body 200. The fastening mechanisms 206 of the first arm 204 and second arm 204 are identical but the fastening mechanism 206 of the cam 400 is smaller. The difference in size of the fastening mechanisms 206 represents the contrasting rotatable mechanisms used for the different components. The first arm 204, the second arm 204, and the cam 400 all comprise a hollow channel which pass through their mass and align with the lateral axis Y. The hollow channel of the first arm 204, the second arm 204, and the cam 400 reversibly house one of the fastening mechanisms 206. In examples, the two fastening mechanisms 206 for the first arm 204 and second arm 204 comprise two inwardly facing shoulder screws wherein the heads of the screw are each detachably fixed to one generally circular face of main body 200 and the shoulder and thread of the screw protrude into and sit inside of the main body 200 and first arm 204 or second arm 204. The first and second arm 204 are rotatably connected to the main body 200 via the fastening mechanisms 206. In examples, the fastening mechanism 206 for the cam 400 comprises one inwardly facing shoulder screw wherein the head of the screw is detachably fixed to the back generally circular face of main body 200 and the shoulder and thread of the screw protrude into and sit inside of the main body 200 and the cam 400. The other side of the cam 400, the front side, is detachably connected to the main body 200 via a casing which is discussed with reference to Figures 6A and 6B.

The fastening mechanisms 206 are configured to rotatably connect the first arm 204, the second arm 204, and the cam 204 to the main body 200 such that they can freely rotate together against one another about the lateral axis Y inside the spreader block 100. The fastening mechanisms 206 are also configured to detach from the main body 200 such that the first arm 204, the second arm 204, and the cam 204 are removable from the spreader block 100.

In use, the fastening mechanisms 206 allow the spreader block 100 to stably move between the open and closed configuration and allow the spreader block 100 to be quickly taken apart or constructed for repairs, maintenance, or manufacture.

In use, a cord connects the distal ends of the two elongated members 102 forming the net arms of the landing net system 108. The cord is shorter than the distance between the tips of the two fully spread elongated members 102 forming the net arms. The elongated members/net arms 102 therefore flex slightly to accommodate this difference. Advantageously, this (i) stops the elongated members/net arms 102 from being able to pull out of the arms 204 of the spreader block 200, (ii) puts tension into the system, pulling the ends or tips of the two fully spread elongated members/net arms 102 towards each other. This tension pulls the elongated members/net arms 102 tightly towards the cam 400, and therefore holds the cam 400 into the holding recesses or notches 704 in the arms 204, (iii) it springs the mechanism into the closed configuration, so that when the user unlocks the cam 400, the arms 204 spring naturally back to being parallel.

Figures 6A and 6B respectively show a perspective view of the main body 200 and a perspective view of the main body 200 without a casing 600. The casing 600 is a flat U-shaped component which forms the top of the front generally circular face of the main body 200. The casing 600 detachably connects to the main body 200 to form the top of the front generally circular face such that a circular hole 602 is created in the front of the main body 200. The front components of the fastening mechanisms 206 for the first arm 204 and second arm 204 are shown in Figures 6A and 6B. The back components of the fastening mechanisms 206 for the first arm 204 and second arm 204 are not shown in Figures 6A and 6B. The holes in the main body 200 which house the back components of the fastening mechanisms 206 are shown in the back generally circular face of the main body 200. The casing 600 is coupled to the front of the main body 200 via the front part of the two fastening mechanisms 206, for the first arm 204 and the second arm 204, passing through the end of the two arms of the U-shaped casing 600 as well as the main body 200.

The fastening mechanisms 206 for the first arm 204 and second arm 204 are configured to detachably connect the casing 600 to the main body 200 and wherein connecting the casing 600 to the main body 200 provides a circular hole 602 to house the means for actuating the cam 202. In examples, the means for actuating the cam 202 is fixedly connected to the cam 400. The casing 600 is configured to clamp the means for actuating the cam 202 and the cam 202 to the main body 200. The fastening mechanism 206 for the cam 400 is configured to rotatably and detachably fix the back of the cam 400 inside the main body 200 such that the cam 400 can freely rotate within the main body 200 and the casing 600 is configured to detachably fix the front of the cam 400 inside the main body 200.

In use, the main body 200 and casing 600 provide a quickly constructable and secure housing for the cam 600, first arm 204, second arm 204, and means for actuating the cam 202 to securely rotate within while transitioning the landing net system 108 between the open and closed configuration.

Figures 7A and 7B show a front-on view and perspective view of the first arm 204 and second arm 204 of the spreader block 100 in the closed configuration as shown in Figure 5A. The first arm 204 and the second arm 204 are optionally the mirror image of one another and optionally comprise a generally cylindrical shaft with an open end 706 and a rounded closed end. The closed end of the arms 204 comprise the hollow channel 708 which houses the fastening mechanism 206. The cylindrical shaft, via the open end 706, houses one of the two elongated members 102. The outer surface of the cylindrical shaft, on one side, optionally comprises a raised surface 700 wherein the raised surface 700 optionally comprises a groove 702 which mimics the shape of the raised surface 700. In examples, the raised surface 700 is nonparallel to the axis of the arm 204. The raised surface 700 of the arms 204 comprise a recess or notch 704. The open end 706 of the cylindrical shaft optionally comprises a reversible fastening mechanism to reversibly fix one of the two elongated members 102 inside the cylindrical shaft. The reversibly fastening mechanism for the two elongated members 102 may be, for example, a set screw, a clamping collar, locking ring, or key and keyway.

The rounded closed end of the first and second arms 204 with the hollow channel are configured to house the fastening mechanism 206 and tilt about the fastening mechanism 206 within the main body 200. The raised surface 700, the groove 702, and the notch 704 are configured to house and streamline the movement of the cam 400 as the cam 400 rotates against the arm 204. The interaction of the cam 400 and arms 204 will be described in more detail with reference to Figures 9A, 9B, 10A, 10B, 11A, and 11B.

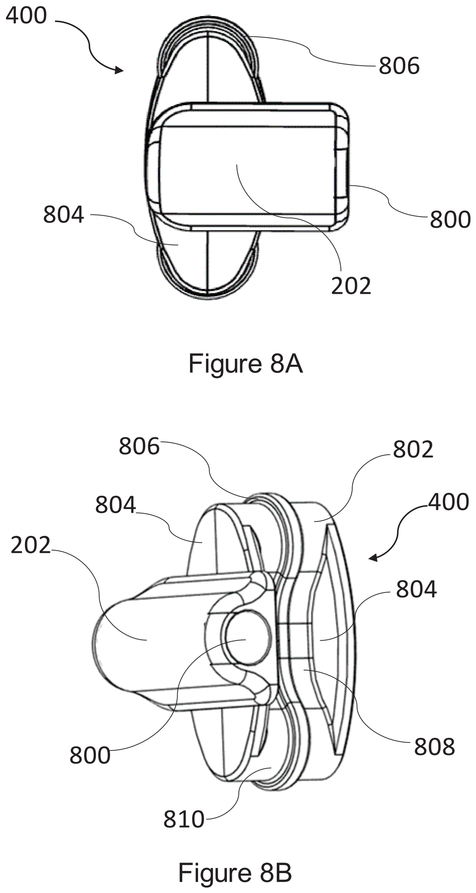

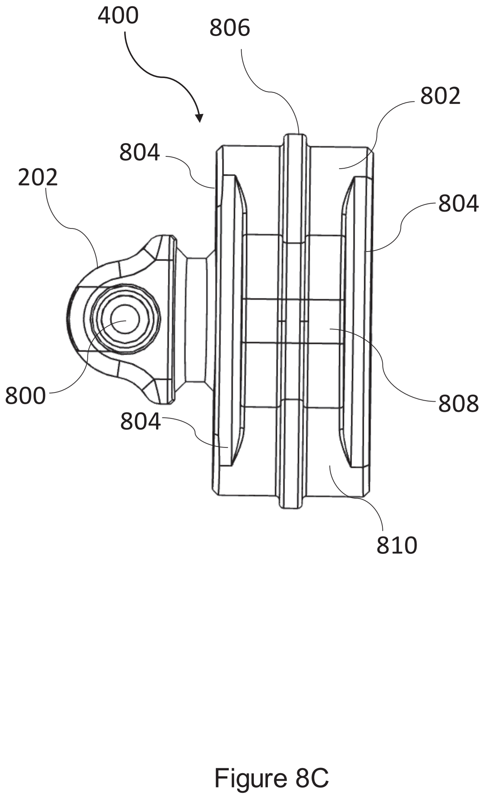

Figures 8A, 8B, and 8C show a front-on view, perspective view, and side-on view of the cam 400 and the means for actuating the cam 202. The cam 400 is optionally fixedly connected to the means for actuating the cam 202 via a neck portion. In some examples, the cam 400 is preferably integrally formed with the means for actuating the cam 202. In other words, the cam 400 and means for actuating the cam 202 are a single part. In some examples, an internal metal plate may be provided connecting the cam 400 with the means for actuating the cam 202. Providing the cam 400 and means for actuating the cam 202 as a single part reduces the likelihood that there may be failure - for example, reducing the likelihood of failure due to the high torque that may be placed on the neck portion connecting the cam 400 to the means for actuating the cam 202.

The pivot point 206 of the cam 400 and the means for actuating the cam 202, not shown in Figures 8A, 8B, and 8C, is optionally located at the centre of the cam 400 and is aligned parallel to the lateral axis Y. The cam 400 comprises a circumference and the circumference comprises a depth and a ridge 806. The circumference of the cam 400 comprises two concave surfaces 808 and two convex surfaces 810 and defines the boundary of a solid figure-eight shaped body 802. The two concave surfaces 808 are opposite one another relative to the pivot point 206 of the cam 400 and the two convex surfaces 810 are opposite one another relative to the pivot point 206 of the cam 400. The figure eight-shaped body 802 of the cam 400 is sandwiched between two generally oval-shaped flat faces 804 which protrude beyond the concave surfaces 808 of the circumference of the cam 400. As shown in Figures 8B and 8C, the distal end of the cylindrical body of the means for actuating the cam 202, distal from the pivot point 206, optionally comprises an orifice 800 which reversibly houses the proximal end of the lever 208. The means for actuating the cam 202 also optionally comprises a neck, or connection of smaller diameter, between the cylindrical body and the cam 400.

The orifice 800 of the means for actuating the cam 202 is configured to detachably receive the proximal end of the lever 208 and transfer torque exhibited on the lever 208 to the means for actuating the cam 202. The neck of the means for actuating the cam 202 is configured to attach the cam 400 to the means for actuating the cam 202 and to be clamped into the main body 200 by the casing 600 when the casing 600 is fastened to the main body 200. The ridge 806 is configured to traverse the grooves 702 of the first arm 204 and second arm 204 and the circumference of the cam 400 is configured to traverse the raised surface 700 of the first arm 204 and second arm 204. The protruding faces 804 of the cam 400 are configured to enclose the raised surface 700 of the first arm 204 and second arm 204 when the first arm 204 and the second arm 204 are in the closed configuration.

However, it will be understood that in other example the means for actuating the cam 202 is permanently attached to the lever 208. For example, the lever 208 may be integral with the cam 202. In such examples, the net safe arrangement 106 may be inserted around or over the lever 208. In such examples it will also be understood that the relative position of the net safe arrangement 106 may interfere with movement of the lever 208. In such examples it will be understood that the relative position and/or shape of the lever 208 may be adjusted to not interference with the net safe arrangement 106. For example, the relative position at which the lever 208 engages with the means for actuating the cam 202 may be adjusted so that when the spreader block 100 is in the open configuration the lever 208 is not aligned with the longitudinal axis X but rather is at a slight angle to the longitudinal axis X. Additionally, or alternatively, the shape of the lever 208 may be altered, for example to have a slight bend or dog-leg so as not to interfere with the net safe arrangement 106.

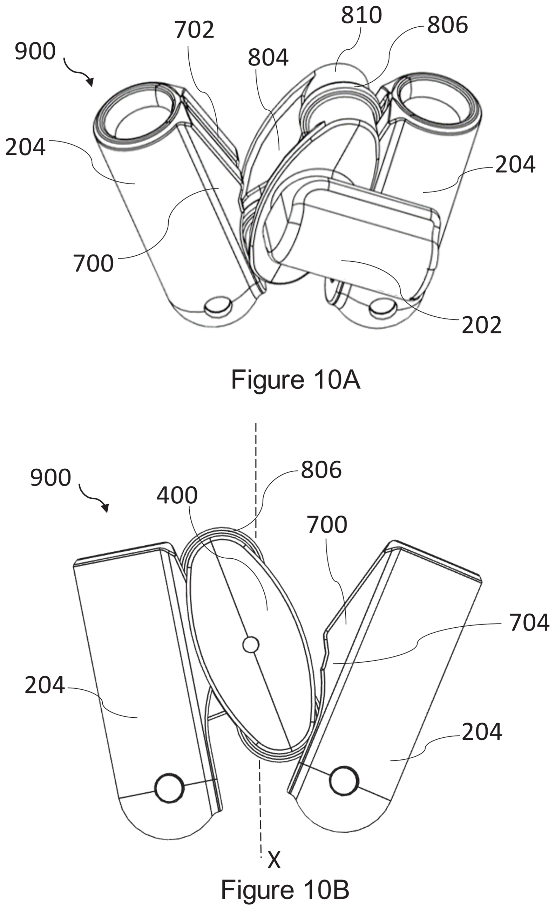

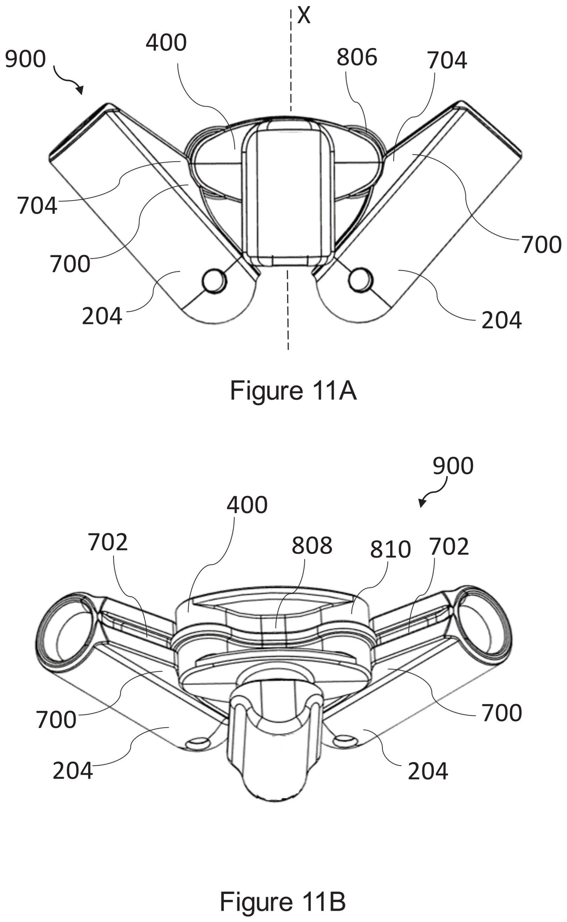

Figures 9A and 9B show the cam sliding system 900, comprising the cam 400, the means for actuating the cam 202, the first arm 204, and the second arm 204, in the closed configuration. Figures 10A and 10B show the cam sliding system 900 in the middle configuration and Figures 11A and 11B show the cam sliding system 900 in the open configuration. The cam 400 is arranged between the first arm 204 and second arm 204. As shown in the perspective views of Figures 9B, 10A, and 11B, at least a part of the ridge 806 of the cam 400 is housed by the groove 702 of the first arm 204 and second arm 204 in every configuration. In every configuration, at least part of the raised surface 700 is in contact with the circumference of the cam 400 and in the closed configuration the raised surfaces 700 of the first arm 204 and the second arm 204 are housed by the protruding surfaces 804 of the cam 400. In the open configuration the convex surfaces 810 of the cam 400 are housed by the notches 704 of the first arm 204 and second arm 204. In examples, the surfaces of the raised surfaces 700, groove 702, and ridge 806 comprise low coefficients of friction.

The means for actuating the cam 202 and the cam 400 are configured to be turned by the lever 208 which is torqued by a user. The cam 400, first arm 204, and second arm 204 are configured to rotate independently about respective pivot points 206. Rotation of the cam 400 from the closed configuration to the open configuration rotates the length of the cam 400 such that it transitions from aligning parallel to the longitudinal axis X to sitting perpendicular to the longitudinal and lateral axes X, Y. The circumference of the cam 400 and the ridge 806 are configured to slide along the first arm 204 and the second arm 204 such that rotation of the cam 400 tilts the first arm 204 and second arm 204 in opposite directions. The notches 704 of the first arm 204 and the second 204 are configured to reversibly house the convex surfaces 810 of the cam 400 such that torque by a user is required to slip the convex surfaces 810 out of the notches and move the spreader block from the open configuration to the closed configuration. The sliding groove-ridge 702, 806 and protruding faces-raised surface 804, 700 connections are configured to accurately tilt the first arm 204 and second arm 204 in response to rotation of the cam 400 and inhibit lateral motion of the components inside the main body 200. The notches-convex surfaces connection 704, 810 are configured to securely hold the landing net system 108 in the open configuration and quickly release the first arm 204, second arm 204, and landing net system 108 from the open configuration under torque from a user. In examples, the pivot points 206 of the first arm 204 and second arm 204 are rotatably biased and configured to return the first arm 204 and second arm 204 to the closed configuration once released from the hold of the notches 704.

However, it will be appreciated that in other examples, instead of the notches-convex surfaces connection 704, 810, in other examples the means to lock the net arms 204 in the open configuration could be via protrusions on the body of the spreader block 100, rather than via recesses or notches 704 on the profile of the net arms 204 to hold the cam 400 either directly, or by holding the lever

## Claims

1. A spreader block for a landing net, the spreader block comprising:
a main body;
a first arm and a second arm both, each pivotably connected to the main body;
a cam pivotably connected to the main body; and
a means for actuating the cam;
wherein the spreader block is arranged to provide a closed configuration in which the first arm and the second arm are substantially parallel to each other, and an open configuration in which the first arm and second arm are non-parallel to each other; and
wherein the cam is arranged between the first arm and the second arm such that rotation of the means for actuating the cam relative to the main body moves the first arm and the second arm between the closed position and open position.

2. The spreader block of claim 1, wherein the cam, the first arm, and the second arm are configured to rotate independently about respective pivot points.

3. The spreader block of any of the previous claims wherein the cam is arranged between the first arm and the second arm such that rotation of the means for actuating the cam relative to the main body moves the first arm and the second arm between the closed position and open position by the cam sliding along the first arm and the second arm.

4. The spreader block of any of the previous claims, wherein the cam comprises a circumference, the circumference of the cam comprises a depth and a ridge, the first arm comprises a raised surface, and the second arm comprises a raised surface;
wherein the raised surface of the first arm and the raised surface of the second arm face one another and both comprise a groove which mimic the shape of the raised surface; and wherein the ridge is configured to traverse the grooves and the circumference is configured to traverse the raised surface when the cam slides along the first arm and the second arm.

5. The spreader block of claim 4, wherein (i) the raised surface of the first arm and the raised surface of the second arm are nonparallel to the axis of the first arm and the axis of the second arm, (ii) the topography of the raised surface of the first arm and the topography of the raised surface of the second arm are mirror image to one another, (iii) the raised surface of the first arm and the raised surface of the second arm both comprise a notch, wherein the two notches are configured to reversibly hold opposite ends of the cam when the first arm and the second arm are in the open configuration, and/or (iv) the cam is released from the held position in the notches and the first arm and the second arm are moved from the open configuration by rotation of the means for actuating the cam.

6. The spreader block of claim 4, wherein the circumference of the cam comprises:
two concave surfaces; and
two convex surfaces;
wherein (i) the two concave surfaces are opposite one another relative to the pivot point of the cam and the two convex surfaces are opposite one another relative to the pivot point of the cam, (ii) the circumference of the cam defines the boundary of a solid figure-eight shaped body, and/or (iii) the solid figure-eight shaped body of the cam is sandwiched between two generally oval-shaped flat faces which protrude beyond the concave surfaces of the circumference of the cam, and wherein the protruding faces are configured to enclose the raised surfaces of the first arm and the second arm when the first arm and the second arm are in the closed configuration.

7. The spreader block of claim 1, wherein the means for actuating the cam (i) is configured to be operated from outside the main body, and/or (ii) comprises an orifice configured to reversibly house the end of a lever, and wherein the lever is configured to provide rotational motion to the means for actuating the cam when provided with external torque.

8. The spreader block of any of the previous claims, wherein the main body comprises an orifice which reversibly connects to the end of a supporting cylinder and houses an end of the lever such that the supporting cylinder and lever, when housed by the orifice of the main body, extend perpendicularly to the length of the first arm and the second arm, and wherein the supporting cylinder and lever assembly, when housed by the orifice of the main body, form a net safe arrangement, and
wherein (i) the net safe arrangement is configured to support the spreader block above the ground when the end of the net safe arrangement, distal to the spreader block, is inserted into a bank stick, which is inserted into the ground, (ii) the rim of the supporting cylinder, reversibly connected to the orifice of the main body, comprises an anchoring device configured to be inserted into the main body and inhibit twisting of the spreader block relative to the net safe arrangement, and/or (iii) the orifice of the actuating member, when the first arm and the second arm are in the open configuration, is at least partially blocked by the net safe arrangement.

9. The spreader block of claim 1, wherein the cam and means for actuating the cam assembly, first arm, and second arm are detachably connected to the main body.

10. The spreader block of claim 1, wherein the first arm and the second arm are detachably and pivotably connected to the main body by respective fastening mechanisms, and wherein the respective fastening mechanisms also secure a casing to the main body which is configured to clamp the cam and means for actuating the cam to the main body.

11. The spreader block of claim 1, wherein the first arm and the second arm are configured to detachably connect to a first elongated member and a second elongated member respectively, and wherein the first elongated member and the second elongated member are configured to reversibly hold a net therebetween, and/or wherein the main body, on the side distal to the length of the first arm and the second arm, extends into a thin shaft which is detachably housed by an elongated handle.

12. A spreader block for a landing net, the spreader block comprising:
a lever configured to be torqued by a user;
a cam configured to be turned by the lever;
a first arm and a second arm, both configured to be tilted by the cam; and
three pivot points configured to provide independent rotation of the cam, first arm, and second arm.

13. A net support arrangement comprising:
the spreader block of claim 12;
a first elongated member and a second elongated member detachably connected to the first arm and the second arm of the spreader block respectively; and
a net mounted on the first elongated member and second elongated member;
wherein the spreader block is configured to reversibly hold and move the first elongated member and second elongated member between a closed configuration in which the first elongated member is substantially parallel to the second elongated member and an open configuration in which the first elongated member is non-parallel to the second elongated member; and
wherein the net is configured to be removably mounted on the first elongated member and second elongated member when in the closed configuration and fixedly mounted on the first elongated member and second elongated member when in the open configuration.

14. A kit of parts for a ground supported landing net, the kit of parts comprising:
the spreader block of any of claims 1 to 11;
a first elongated member and a second elongated member detachably connected to the spreader block;
a net removably mounted on the first elongated member and the second elongated member; and
a detachable elongated handle.

15. A net safe arrangement for supporting a landing net, the net safe arrangement comprising:
a main body for supporting two net arms;
a receiving portion in the main body;
a supporting cylinder configured to detachably couple to the receiving portion;
wherein the supporting cylinder is configured to detachably couple to a bank stick to support the landing net; and
wherein at least one of the supporting cylinder and/or receiving portion comprise means to inhibit rotation of the supporting cylinder relative to the main body.
